Europäisches Patentamt

(19) European Patent Office

Office européen des brevets

(11) Veröffentlichungsnummer: **0 129 742 B1**

(12) **EUROPÄISCHE PATENTSCHRIFT**

(45) Veröffentlichungstag der Patentschrift: **18.09.91**

(51) Int. Cl.⁵: **G01C 19/38**, G01C 21/18

(21) Anmeldenummer: **84106323.3**

(22) Anmeldetag: **02.06.84**

(54) **Selbstnordendes Kurs- und Lage-Referenzgerät für Fahrzeuge.**

(30) Priorität: **23.06.83 DE 3322632**

(43) Veröffentlichungstag der Anmeldung:
**02.01.85 Patentblatt 85/01**

(45) Bekanntmachung des Hinweises auf die
Patenterteilung:
**18.09.91 Patentblatt 91/38**

(84) Benannte Vertragsstaaten:
**FR GB SE**

(56) Entgegenhaltungen:
**FR-A- 2 458 051**
**GB-A- 2 049 931**
**GB-A- 2 056 062**
**US-A- 3 146 530**

(73) Patentinhaber: **Anschütz & Co. G.m.b.H.**
**Mecklenburger Strasse 32-36**
**W-2300 Kiel-Wik(DE)**

(72) Erfinder: **Vepa, Narayana Murti, Dr. Ing.**
**Wilhelmshavener Strasse 10**
**W-2300 Kiel(DE)**
Erfinder: **Weidel, Rolf-Dieter, Ing. grad.**
**Am Wohld 40 a**
**W-2300 Kiel(DE)**
Erfinder: **Werblinski, Dieter**
**Seelandweg 12**
**W-2300 Kiel(DE)**
Erfinder: **Rix, Rudolf**
**Buschberg 9**
**W-2300 Altenholz(DE)**

(74) Vertreter: **Baumann, Eduard, Dipl.-Phys.**
**Postfach 1201 Sattlerstrasse 1**
**W-8011 Höhenkirchen bei München(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein nordermittelndes Kurs- und Lage-Referenzgerät für Fahrzeuge gemäß dem Oberbegriff des Anspruches 1.

Derartige Geräte werden in Luft-, Land- und insbesondere Wasserfahrzeugen, d.h. im wesentlichen Schiffen, eingesetzt, häufig in Zusammenhang mit einem Kreiselkompaß. Sie dienen der Feststellung der Nordrichtung und der Lage des Fahrzeuges. Ein ähnliches Referenzgerät, das nur die Nordrichtung ermittelt, ist in der deutschen Patentschrift 29 22 412, die der GB-A-2049931 entspricht, beschrieben. Hier ist ein zweiachsiger Wendekreisel um eine Eingangsachse drehbar angeordnet. Zusätzlich ist wenigstens ein Beschleunigungsmesser vorgesehen. Der Meßbereich der verwendeten Drehgeschwindigkeitssensoren muß im gesamten Dynamikbereich eine ausreichend hohe Genauigkeit haben, oder das Gerät darf nur bei stehendem Fahrzeug benutzt werden. Sämtliche auftretenden Frequenzen müssen abgedeckt werden, sowohl hochfrequente Störfrequenzen als auch niederfrequente, von Fahrzeugbewegungen um unterschiedliche Achsen herrührende Frequenzen müssen eliminiert werden können, um eine genaue Anzeige zu bewirken.

Ein nordermittelndes Kurs- und Lage-Referenzgerät für Fahrzeuge der eingangs erwähnten Art ist aus der DE-OS 29 22 414, die der FR-A-2458051 entspricht, bekannt. Dort sind drei Drehgeschwindigkeitsfühler, welche auf die Drehgeschwindigkeiten um drei zueinander senkrechte, fahrzeugfeste Eingangsachsen oder Meßachsen ansprechen, zwei Beschleunigungsmesser, deren fahrzeugfeste zueinander senkrechte Eingangsachsen parallel zu den Eingangsachsen zweier Drehgeschwindigkeitsfühler liegen, sowie ein Rechner vorgesehen.

Das Neue dieser Druckschrift soll in einer bestimmten Ausbildung des Rechners bestehen. Das Gerät soll den Kurs und Transformationsparameter für eine Transformation aus einem fahrzeugfesten Koordinatensystem in ein erdfestes Koordinatensystem unbeeinflußt von Newtonschen Beschleunigungen des Fahrzeuges gegenüber Grund liefern. Die Nordfindung erfolgt über Magnetfelddetektoren. Davon abgesehen ist in der DE-OS 29 22 414 eine einachsige stabilisierte Rahmenplattform beschrieben, deren Rahmen in üblicher Weise über einen Stellmotor nachgeführt wird.

Aus der DE-OS 23 61 277 ist ein nordsuchendes Gerät mit einem am Band hängenden Kreisel bekannt. Diese Bandaufhängung ist Voraussetzung zur Nordfindung, wie sie üblicherweise für stationäre Kreiselgeräte Anwendung findet, um bei interkardinalen Störbewegungen Gleichrichtereffekte zu vermeiden. Zur Nordfindung wird die Drallresultierende beider Kreisel benutzt; diese stellt somit eine einachsige Nordreferenz dar.

Ein ähnlicher Geräteaufbau ist aus der US-PS 31 46 530 bekannt. Anstelle einer Bandaufhängung ist hier jedoch eine magnetische Lagerung beziehungsweise Gaslagerung vorgesehen. Lediglich zur Erzielung einer Drallerhöhung werden zwei oder mehrere Kreisel eingesetzt und ebenfalls die Drallresultierende zur Nordfindung benutzt. Die Wirkung entspricht somit auch hier derjenigen eines einzelnen Kreisels, auch hier handelt es sich somit um eine einachsige Nordreferenz.

Aus der GB 2056062 A ist ein Lage- und Kurs-Referenzgerät unter Verwendung von zwei Wendekreiseln mit je zwei Freiheitsgraden bekannt, die kardanisch gelagert und starr mit zwei Beschleunigungsmessern verbunden sind.

Der Gegenstand der DE-OS 23 61 277 dient ebenso wie der Gegenstand der US-PS 31 46 530 ausschließlich zur Nordfindung, wobei der Drallvektor eines Kreisels oder die Drallresultierende mehrerer Kreisel in Richtung Nord geführt wird, wie bei klassischen Kreiselkompassen üblich. Die bei dem Gegenstand der US-PS 31 46 530 vorgesehenen Anordnung von zwei Kreiseln in einem gemeinsamen, das Lot darstellenden Pendel hat mit einem selbsttätigen nordermittelnden Kurs- und Lage-Referenzgerät für Fahrzeuge der eingangs erwähnten Art ebensowenig zu tun wie die Verwendung einer Vielzahl von rotierenden Massen an einem Pendel beim Gegenstand der US-PS 31 46 530.

Der Erfindung liegt die Aufgabe zugrunde, ein Referenzgerät gemäß dem Oberbegriff des Anspruches 1 so auszubilden, daß die Nachteile des Standes der Technik vermieden werden, daß auf Lotfühler oder Beschleunigungsmesser verzichtet werden kann, und daß eine Reduzierung des erforderlichen Dynamikbereiches bei hoher Meßgenauigkeit möglich ist.

Die Aufgabe wird erfindungsgemäß durch die Merkmale des Kennzeichens des Anspruches 1 gelöst. Weitere Ausbildungen der Erfindung sind in den abhängigen Ansprüchen dargestellt.

Beim Referenzgerät gemäß Erfindungsgegenstand sind die Kreisel zum Messen der drei senkrecht zueinander stehenden Meßachsen als gemeinsame mechanische Baugruppe ausgebildet, die ein Pendel ist, das innerhalb der Horizontalebene um beliebige Achsen pendeln kann. Hierbei soll eine der drei Meßachsen mit der Längsachse des Pendels zusammenfallen oder parallel zu ihr liegen.

Bei einem bevorzugten Ausführungsbeispiel sind ein mit zwei Meßachsen ausgestatteter freier Kreisel

2

und ein weiterer Kreisel in Form eines Wendekreisels, eines integrierenden Wendekreisels oder eines optischen Drehgeschwindigkeitssensors so an einem gemeinsamen Pendel angeordnet, daß sie einen integrierten Bestandteil desselben darstellen.

Für jede Meßachse kann auch ein eigener Meß- Kreisel vorgesehen sein. Durch die mögliche Durchführung von Winkelbewegungen durch das Pendel um alle Achsen parallel zur Horizontalebene wird eine Abkopplung des Pendels von den Fahrzeughauptachsen bei Drehbewegungen erreicht.

In einer stationären Anwendung eines derartigen Referenzgerätes stellt die Pendellängsachse bis auf unvermeidliche Störeinflüsse, die durch Lagerreibung und dergleichen hervorgerufen werden, die wahre Lotrichtung dar, während die Pendellängsachse in einem sich bewegenden Fahrzeug oszillierende Winkelbewegungen entsprechend der Fahrzeugdynamik durchführt. Diese Winkelbewegungen können durch eine geeignete Dämpfung minimiert werden.

Im zeitlichen Mittel sind diese Bewegungen null und stellen somit keine Beeinträchtigung der vorgeschlagenen Lösung dar.

Nach einem Ausführungsbeispiel wird das Pendel kardanisch aufgehängt. Ordnet man in den Kardanachsen der Pendelaufhängung Winkelmeßelemente an, so läßt sich die Lage des Fahrzeuges zum Horizont ermitteln.

Verknüpft man die so gewonnenen Signale in geaignetor Weise mit den vom freien Kreisel herrührenden Signalen, so läßt sich auch bei einem bewegten Fahrzeug seine Lage zum Horizont ermitteln.

Die Realisierung einer Kompaßfunktion durch ein derartiges Nordermittelndes Kurs- und Lage-Referenzgerät für Fahrzeuge läßt sich durch drei unterschiedliche Maßnahmen erreichen:

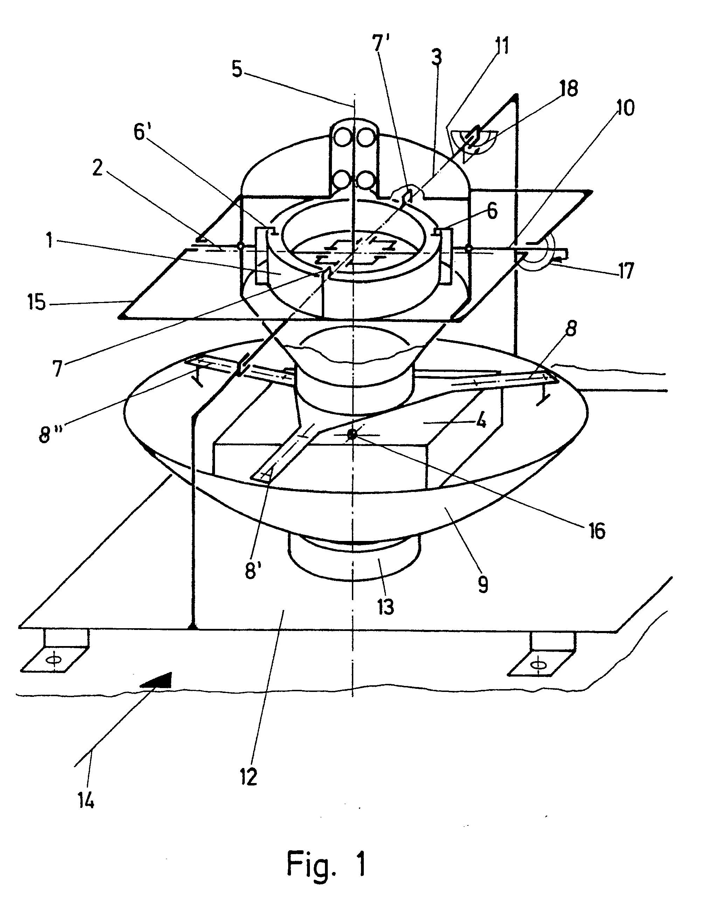

A Durch eine Anordnung (nach Fig. 1), bei der man die zur Fesselung des freien Kreisels benötigten Momente in elektrische Signale umformt und durch deren Vergleich die Nordrichtung bestimmt,

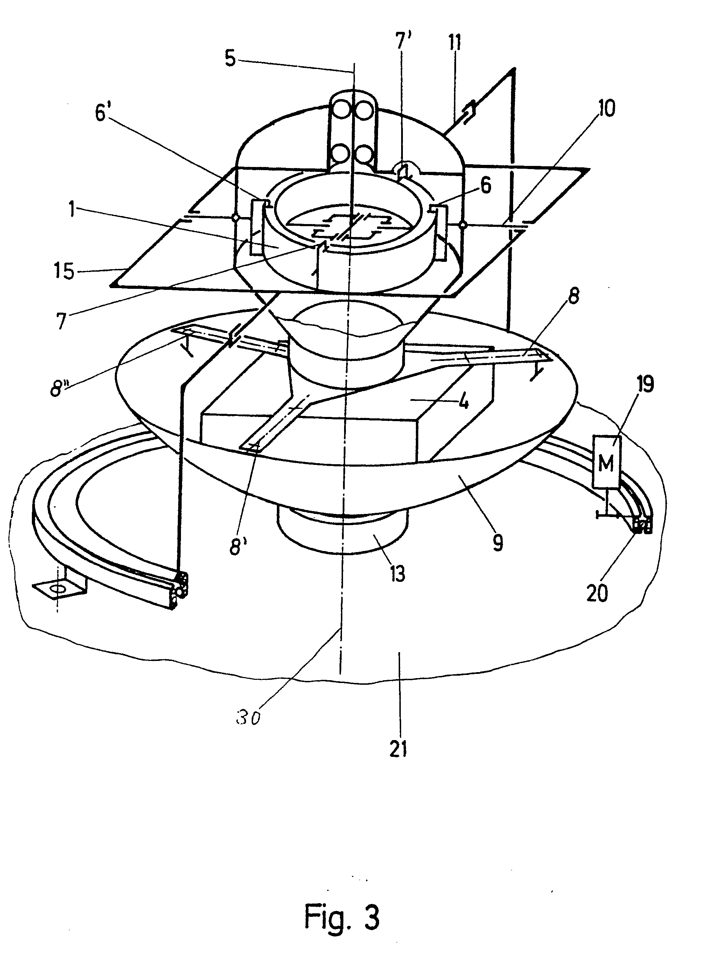

B Durch eine Anordnung (nach Fig. 3), bei der das gesamte Gerät oder nur der freie Kreisel drehbar gelagert ist. Wird bei dieser Anordnung das Gerät oder der Kreisel solange gedreht, bis in einer der Meßachsen das zur Fesselung benötigte Moment ein Maximum und das Fesselmoment in der zweiten Meßachse ein Minimum erreicht, so entspricht die Lage der zuerst genannten Meßachse der Nord- Südrichtung (Gerät auf bestimmte Stellen gedreht).

C Durch eine Anordnung (nach Fig. 3), bei der das gesamte Gerät oder nur der freie Kreisel kontinuierlich mit konstanter Geschwindigkeit gedreht wird.

Der Verlauf der zur Fesselung des freien Kreisels benötigten Momente entspricht einer Sinusfunktion, wobei die aus diesen Momenten gewonnenen Signale aus den beiden Messachsen um 90° phasenverschoben sind und zur Ermittlung der Nordrichtung herangezogen werden können.

Die Anordnung nach A entspricht im wesentlichen strap-down Plattformen, wie sie in Land-, Luft- und Wasserfahrzeugen angewendet werden. Als Sensoren werden bei diesen Systemen drei Drehgeschwindigkeitssensoren in Form von Kreiseln und drei Beschleunigungsmesser benötigt, die im gesamten Dynamikbereich eine ausreichend hohe Meß- und damit Anzeige-Genauigkeit aufweisen müssen.

Aufgrund der gewählten Pendelanordnung des vorgeschlagenen Systemes kann auf alle drei Beschleunigunesmesser verzichtet werden. Die Pendelaufhängung und die Dämpfung führen zu einer Reduzierung des erforderlichen Dynamikbereiches der Kreiselsensoren, ein Driftausgleich erhöht die meß- und damit Anzeigegenauigkeit.

Diese Anordung, führtauch zu einer kostengünstigen Lösung.

Ausführungsbeispiele der Erfindung sind in der Zeichnung dargestellt. Es zeigt:

| Figur 1 | in perspektivischer Darstellung ein erstes Ausführungsbeispiel der Erfindung, |
|---|---|
| Figur 2 | ein weiteres Ausführungsbeispiel der Erfindung, wobei auf Winkelmeßelemente in den Kardanachsen verzichtet wurde, |
| Figur 3 | ein drittes Ausführungsbeispiel mit drehbarer Lagerung des gesamten Referenzgerätes, |
| Figur 4 | die Darstellung der Meßachsen der Kreisel zum Navigationsrahmen durch sog. Eulerwinkel, |
| Figur 5 | die schematische Schaltungsanordnung zur Ermittlung des Kurswinkels nach einem Ausführungsbeispiel, |
| Figur 6 | die Frequenzgänge des Referenzgerätes, |
| Figur 7 und Figur 8 | eine Verknüpfung der aus dem gefesselten Kreisel gewonnenen Drehgeschwindigkeitssignale mit den Signalen der Winkelmesselemente in den Kardanachsen für die Ermittlung der Roll- und Stampfwinkel, |
| Figur 9 | die Tangens- und Cotangensfunktionen von 0 bis $2\pi$, d.h. innerhalb eines Vollkreises, mit den acht zwischen +1 und -1 gebildeten Achtelsegmenten, |
| Figur 10 | die Einteilung des Vollkreises in acht Achtelsegmente sowie die für jedes dieser |

Achtelsegmente geltenden Auswertebedingungen hinsichtlich der Fesselsignale $\omega_{ys}$ und $\omega_{zs}$.

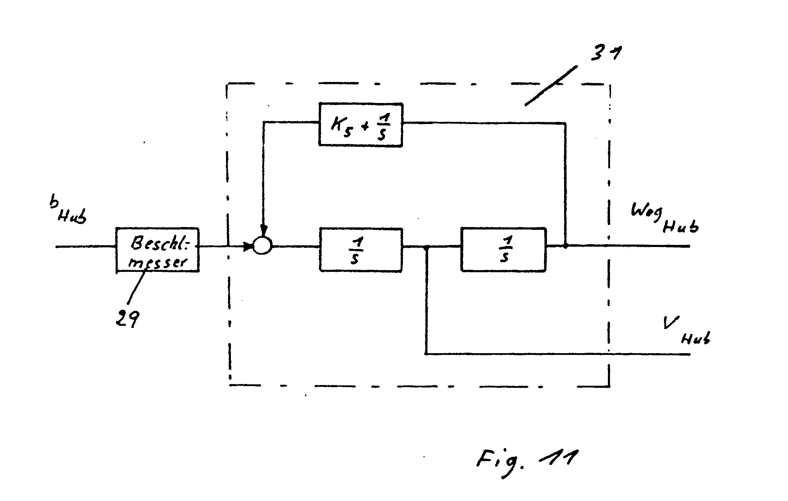

Figur 11       die schematische Schaltungsanordnung zur Ermittlung der Hubgeschwindigkeit und des Hubweges.

1.) Beschreibung der Fig. 1 - 3

Ein freier Kreisel 1, ausgestattet mit zwei Meßachsen 2 und 3, ist zusammen mit einem Drehgeschwindigkeitssensor 4 so angeordnet, daß beide Bestandteil einer mechanischen Baugruppe sind, die innerhalb eines Kardanrahmens 15 um eine erste Kardanachse 10 und zusammen mit diesen um eine zweite Kardanachse 11 Winkelbewegungen ausführen kann.

Da der Schwerpunkt 16 dieser Baugruppe unterhalb des Schnittpunktes der beiden Kardanachsen 10 und 11 liegt, stellt diese ein Pendel dar, dessen Längsachse 5 in einer stationären Umgebung das Lot darstellt.

Die Anordnung des freien Kreisels 1 ist so gewählt, daß seine Drallachse identisch mit der Pendellängsachse 5 ist und seine Meßachsen 2 und 3 somit senkrecht in einer Ebene auf dieser stehen.

Die beiden Meßachsen werden dargestellt durch je ein Abgriffelement 6 und 7. Sie stehen, in einer Ebene liegend, senkrecht aufeinander und sind in der Lage, die Stellung des Kreiselrotors, bezogen auf seine Drallachse, abzutasten.

Über ebenfalls in den Meßachsen angeordnete Führmotoren 6' und 7' ist es möglich, Momente auf den Kreiselrotor auszuüben und ihn z. B. in seiner Nullage zu fesseln, wobei die Nullage dann gegeben ist, wenn die Figurenachse des Kreisels mit der Drallachse übereinstimmt.

Der Drehgeschwindigkeitssensor 4 in Form eines Wendekreisel bekannter Bauart, ist am unteren Ende des Pendels angeordnet. Seine Meßachse 30 fällt mit der Pendellängsachse 5 zusammen oder ist parallel zu dieser. Er ist somit in der Lage, Drehbewegungen um die Pendellängsachse zu sensieren.

Ebenfalls am unteren Ende des Pendels ist, über drei Speichen 8, 8' und 8'' befestigt, eine Kugelschale 9 angeordnet, deren geometrischer Mittelpunkt mit dem Schnittpunkt der beiden Kardanachsen 10 und 11 zusammenfällt.

Zusammen mit einem auf dem fahrzeugfesten Teil 12 des Gerätes angeordneten Magnet 13 ergibt die Kugelschale eine Wirbelstromdämpfung, die die Bewegungen des Pendels um die Kardanachsen 10 und 11 dämpft. In den Kardanachsen sind Winkelmeßelemente 17 und 18 angeordnet, die eine Verdrehung der inneren Kardanachse 10 gegenüber dem Kardanrahmen und eine Verdrehung des Kardanrahmens 15 gegenüber dem fahrzeugfesten Teil 12 messen.

Wird das Gerät auf einem Fahrzeug so angeordnet, daß die Fahrzeuglängsachse 14 zur äußeren Kardanachse 10 oder inneren Kardanachse 11 parallel liegt, so kann mit diesen Winkelmeßelementen eine Neigung des Fahrzeuges um seine Längs- und Querachse im Stillstand ermittelt werden.

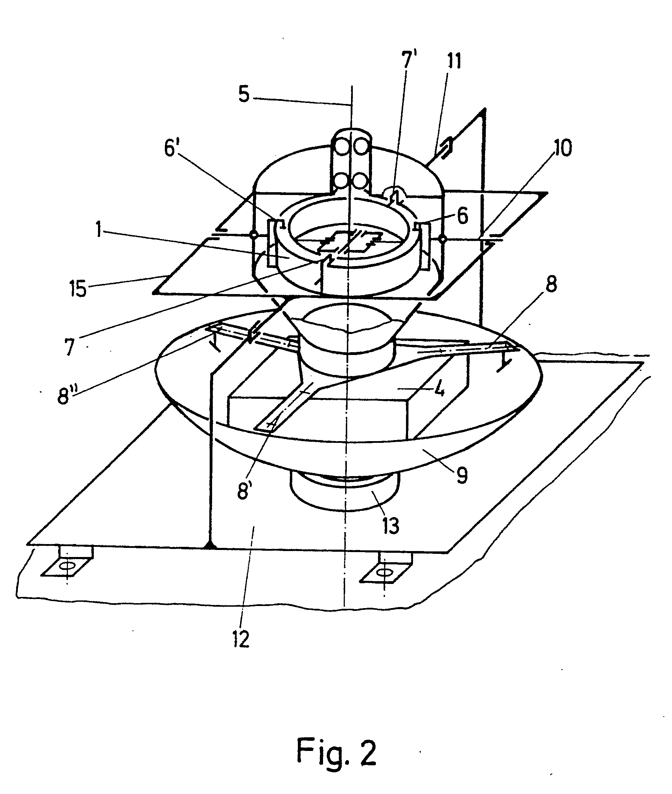

Fig. 2 zeigt eine Anordnung, bei der auf die Winkelmeßelemente in den Kardanachsen 10 und 11 verzichtet wurde. Dies ist dann möglich, wenn das Gerät nur als Kompaß verwendet wird. Der übrige Geräteaufbau ist identisch mit dem in Fig. 1 beschriebenen, wobei gleiche Teile mit gleichen Bezugszeichen versehen sind.

Fig. 3 zeigt eine Anordnung, bei der das Gerät durch einen Motor 19 und ein Lager 20 um eine zur Aufstellfläche 21 senkrechte Achse verdreht werden kann. Dies ist dann nötig, wenn eines der beiden unter B) oder C) beschriebenen Verfahren zur Nordsuche, oder eines der im folgenden beschriebenen Verfahren zur Kompensation der Drift des freien Kreisels angewendet wird. Auch hier sind gleiche Teile mit gleichen Bezugszeichen versehen.

Ist eines der unter B) oder C) beschriebenen Verfahren zur Nordsuche in Verbindung mit einer Horizontreferenz nach dem beschriebenen Verfahren vorgesehen, so ist es sinnvoll, nur den freien Kreisel drehbar zu lagern, damit die Zuordnung der Kardanachsen zur Fahrzeuglängs- bzw.-querachse erhalten bleibt.

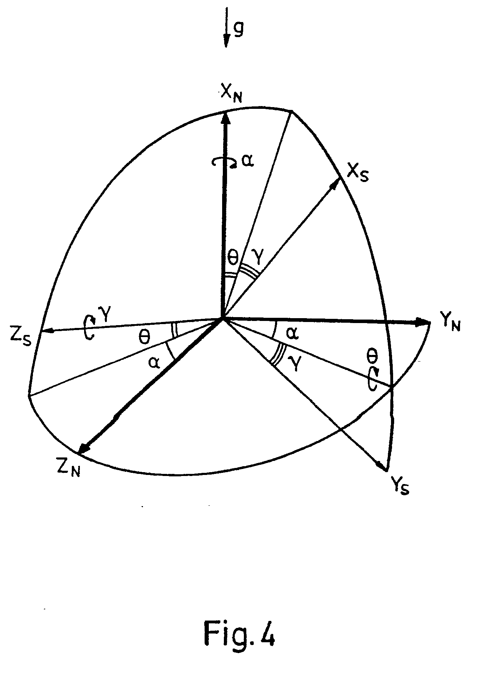

2.) Funktionsbeschreibung anhand der Fig. 4 - 10

Auf einem bewegten Fahrzeug können die Meßachsen der Kreisel zum Navigationsrahmen (Lot, Ost, Nord) durch die Eulerwinkel beschrieben werden (Fig. 4). Die in den Kreiselachsen gemessenen Winkeldrehgeschwindigkeiten enthalten die Komponenten der Erddrehgeschwindigkeit $\omega_E$, der Drehgeschwindigkeit erzeugt durch die Fahrzeugbewegung auf der Erdoberfläche $\frac{V}{R}$, und der Fahrzeugdrehgeschwindigkeit $\omega_F$.

Durch die gewählte Pendelanordnung sind die Winkel $\theta$ und $\gamma$ klein und können somit vernachlässigt werden. Wenn sich das Fahrzeug nicht bewegt, können die in den beiden Meßachsen des freien Kreisels gemessenen Winkeldrehgeschwindigkeiten wie folgt beschrieben werden :

$$\omega_{ys} = \omega_E \cdot \cos(\phi) \sin(\alpha) \qquad (1)$$

$$\omega_{zs} = \omega_E \cdot \cos(\phi) \cos(\alpha), \qquad (2)$$

Woraus der Winkel zwischen Nord und der Fahzeuglängsachse (Kurs) errechnet werden kann.

$$\overline{\alpha}_0 = arc\,tan\left(\frac{\omega_{ys}}{\omega_{zs}}\right) \qquad (3)$$

Für ein sich mit der Geschwindigkeit V bewegendes Fahrzeug wird von dem freien Kreisel zusätzlich die Winkeldrehgeschwindigkeiten $\frac{V}{R}$ gemessen:
Somit ergibt sich:

$$\hat{\omega}_{ys} = \omega_{ys} + \frac{V}{R} \qquad (4)$$

$$\omega_{zs} = \omega_{zs}\frac{V}{R} \qquad (5)$$

daraus läßt sich $\overline{\alpha}_i$ errechnen.

$$\overline{\alpha}_i = arc\,tan\left(\frac{\hat{\omega}_{ys}}{\hat{\omega}_{zs}}\right) \qquad (6)$$

Damit kann $\overline{\alpha}_i$ kontinuierlich errechnet werden. Die Winkeldrehgeschwindigkeiten gemessen in den Meßachsen des freien Kreisels können nur über eine entsprechend lange Mittelungszeit ermittelt werden. Dies gilt auch für $\overline{\alpha}_i$.

Für höhere Winkeldrehgeschwindigkeiten ist dies nicht akzeptabel, so daß ein weiteres Sensorsignal benötigt wird, das in der Lage ist, in diesem Zeitraum eine ausreichend genaue Änderung des Kurses $\Delta\alpha$ zu ermitteln.

Hierfür ist ein weiterer Drehgeschwindigkeitssensor, wie z. B. ein Wendekreisel, erforderlich.

Das integrierte Signal dieses Sensors wird genutzt, um die Kursänderung im Zeitintervall $\Delta t$ zu ermitteln.

$$\Delta\alpha = \omega_F \cdot \Delta t \qquad (7)$$

Der Drehratensensor mißt außer dem gewünschten $\omega_F$ die vertikale Komponente der Erdrate. Diese Größe ist mathematisch darstellbar und somit kompensierbar.
$\hat{\alpha}_i$ ergibt somit den jeweils augenblicklichen Kurswert des Fahrzeuges.

$$\hat{\alpha}_i = \overline{\alpha}_i + \Delta\alpha_i \qquad (8)$$

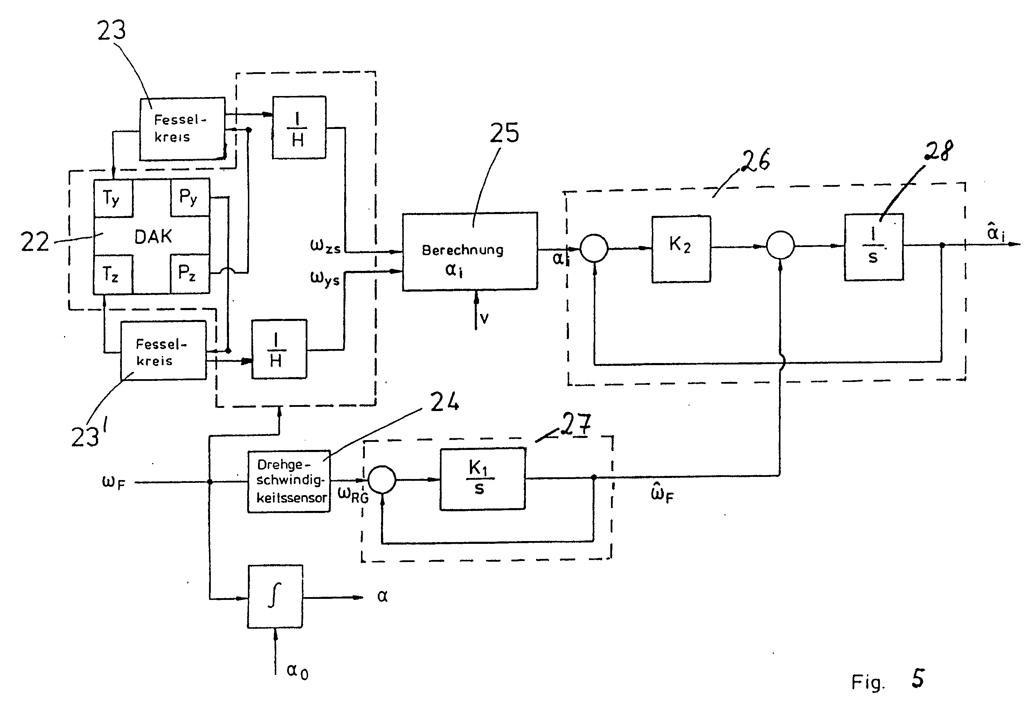

Fig. 5 zeigt schematisch eine Möglichkeit, aus den beiden Kreiselsignalen den Kurswinkel $\hat{\alpha}_i$ zu ermitteln.

Ein freier Kreisel, z. B. ein dynamisch abgestimmter Kreisel (DAK), dessen Drallachse vertikal angeordnet ist, wird über eine Fesselelektronik 23 in beiden Meßachsen in der Nullposition gehalten. Der Kreisel wird somit gezwungen, der Horizontal-Komponente der Erdrotation zu folgen.
Die hierzu benötigten Momente sind proportional zu $\omega_{ys}$ und $\omega_{zs}$.
Aus diesen beiden Werten wird $\alpha_i$ durch einen Rechner 25 errechnet.
Dieses physikalische Prinzip ist bekannt und gehört zu den Grundlagen der Inertial-Navigation. Die Signale $\omega_{ys}$ und $\omega_{zs}$ sind aufgrund der Fahrzeugbewegungen mit höherfrequenten Signalen überlagert, die sich für die Berechnung des Kurswinkels störend auswirken. Aus diesem Grunde ist ein Filter 26 vorgesehen. Diese Anordnung eignet sich nur für stationäre Anwendungen, da dieses Prinzip nicht in der Lage ist, Drehgeschwindigkeiten, wie sie bei bewegten Fahrzeugen auftreten, zu sensieren. Um dies zu realisieren, wird ein weiterer Drehgeschwindigkeitssensor 24 vorgesehen, der verzögerungsfrei diese Winkelbewegungen erfassen kann.

Wie in Fig. 5 dargestellt, wird die Fahrzeugdrehgeschwindigkeit durch einen Drehratensensor 24 gemessen und ein der Drehgeschwindigkeit proportionales Signal $\hat{\omega}_F$ mit einer Eckfrequenz $K_1$ am Filter 27 zur Verfügung gestellt.

Dieses Signal wird in dargestellter Weise dem Signal $\alpha_i$ zuaddiert und ergibt mit $\hat{\alpha}_i$ den augenblicklichen Kurswinkel.

Hierbei ist $K_1$ so zu wählen, daß die benötigten Winkelwerte ausreichend schnell angeboten werden können.

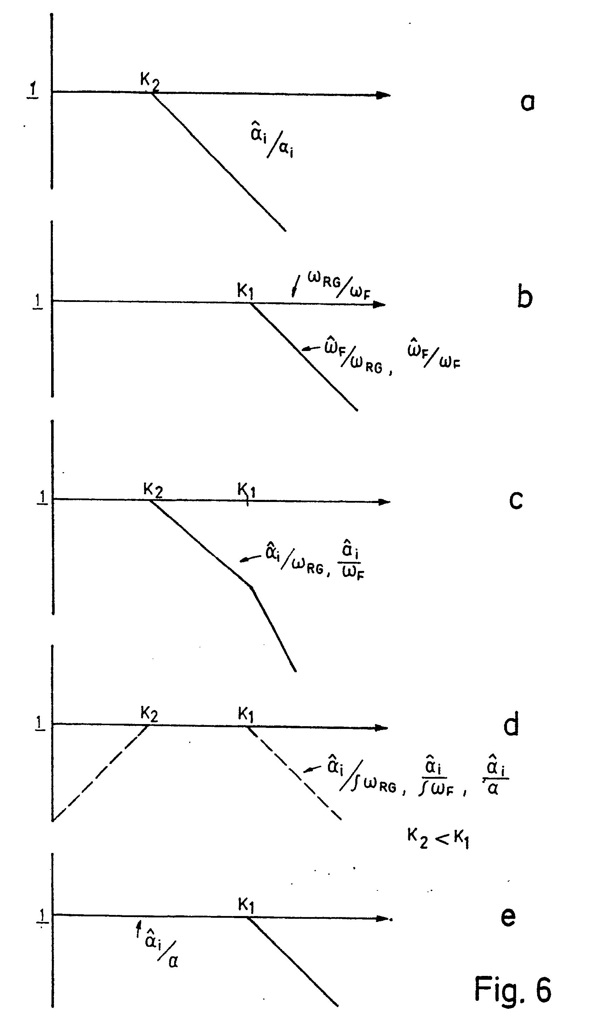

Fig. 6 zeigt die Frequenzgänge des vorgeschlagenen Systems

a: Zeigt den Frequenzgang des Kurssignals, ermittelt aus den Fesselmomenten des DAK's,

b: Zeigt den Frequenzgang des Drehgeschwindigkeitssignals, erzeugt durch den Drehgeschwindigkeitssensor,

c: Zeigt den Frequenzgang des Kurssignals zur Fahrzeugdrehgeschwindigkeit.

d: Zeigt die Kennlinie des Kurssignals zur integrierten Drehgeschwindigkeit des Fahrzeuges,

e: Zeigt den Frequenzgang der Summe der aus beiden Sensoren ermittelten Signale.

## Ermittlung des Horizontes

Das erfindungsgemäß vorgeschlagene System ist mit zusätzlichen Winkelmeßelementen in den Kardanachsen der Pendellagerung (Fig. 1) in der Lage, neben dem Kurswinkel $\alpha$ auch Winkelbewegungen um die Fahrzeuglängs- und -querachse zu ermitteln.

Diese Winkelmeßelemente 17, 18 ermitteln den Winkel $\theta_K$ und $\gamma_K$ zwischen Fahrzeug und Pendel. Dieser Wert, entsprechend gefiltert, stellt den Horizontwinkel in der jeweiligen Fahrzeugachse dar. Die Güte dieser Information ist abhängig von der Genauigkeit der Pendellagerungen und der Winkelmeßelemente.

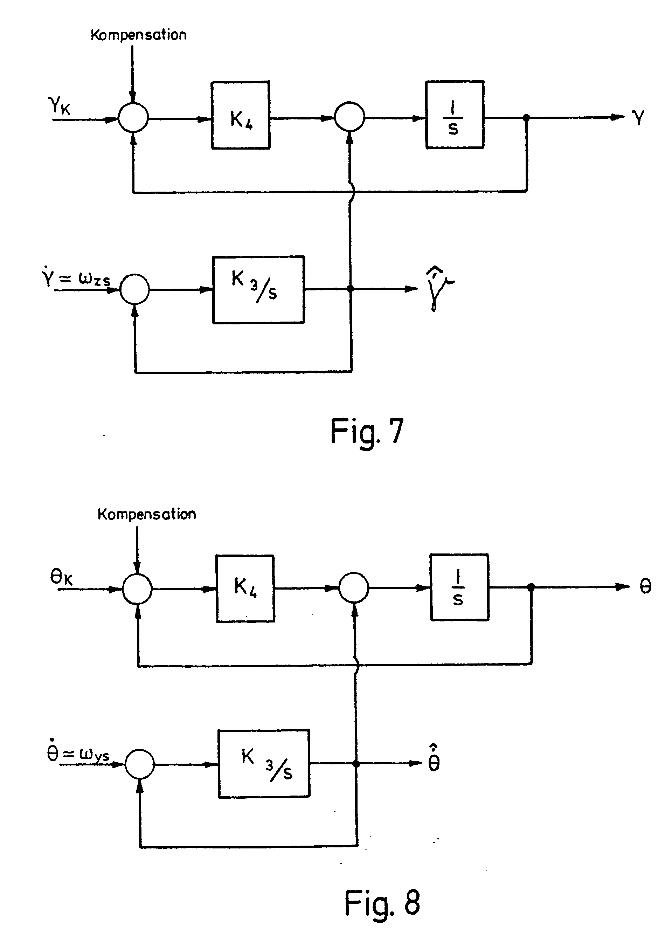

Wegen der benötigten Zeitkonstanten der Filternetzwerke stellt dieses Signal nicht den jeweiligen augenblicklichen Winkelwert dar. Um diesen zu erhalten, ist eine Verknüpfung mit den aus dem gefesselten Kreisel gewonnenen Drehgeschwindigkeitssignalen erforderlich ( siehe Fig 7 und 8).

Die aus den Winkelmeßelementen 17 und 18 der Kardanmeßachsen des Pendels gewonnenen Signale $\theta_K$ und $\gamma_K$ werden über eine Schleife, bestehend aus $K_4$ und $1/S$, gefiltert.

Wie schon bei der Ermittlung des Kurses beschrieben, wird ein aus den Meßachsen des DAK's (freier Kreisel) gewonnenes gefiltertes Drehgeschwindigkeitssignal $\dot{\gamma}$ und $\dot{\theta}$ eingespeist. Es ergeben sich die gleichen Frequenzgänge wie bei der Kursermittlung (Fig. 6).

## Zur Fehlerkompensation

Um für das vorgeschlagene System kostengünstige freie Kreisel (z. B. DAK) anwenden zu können, ist die Korrektur der Kreiseldrift erforderlich. Dies kann wie folgt durchgeführt werden:

Bei Messungen der Fesselmomente in zwei um $180°$ verschwenkten Azimutlagen läßt sich die Kreiseldrift ermitteln. Dieses Verfahren ist bekannt und wird zur Prüfung von Kreiselgeräten benutzt.

Wie in Fig. 3 dargestellt, ist eine Einrichtung vorgesehen, die es gestattet, den Kompaß um $180°$ zu verdrehen, um die o. a. Prüfmethode anzuwenden. Dieses kann manuell oder automatisch sowohl stationär als auch, auf einem sich bewegenden Fahrzeug durchgeführt werden.

In diesem Falle muß die Drehung mit einer bekannten Geschwindigkeit durchgeführt werden und kann somit rechnerisch kompensiert werden.

Wenn das Fahrzeug linear beschleunigt, so geht die pendelnd aufgehängte Anordnung in das Scheinlot. Bei kleinem Winkel gilt die Beziehung

$$\theta \approx \frac{\dot{v}}{g} \tag{9}$$

Die bei Kreisfahrten auftretende Zentrifugalbeschleunigung bewirkt eine Auslenkung um die andere

EP 0 129 742 B1

Achse.

$$\gamma \simeq \frac{\omega_F \cdot V}{g} \qquad (10)$$

Über die Fahrtmeßanlage wird die Vortriebsgeschwindigkeit ermittelt, aus der die lineare Beschleunigung $\dot{V}$ errechnet werden kann.

Die Drehgeschwindigkeit $\omega_F$ wird durch den Wendekreisel des vorgeschlagenen Systems gemessen.

Damit können beide Größen nach den Gleichungen (9 und 10) errechnet und durch geeignete Maßnahmen kompensiert werden.

Der durch die Eigenfahrt des Fahrzeuges verursachte Fahrtfehler, der bei Kreiselkompassen physikalisch bedingt ist, wird durch die Fahrtgeschwindigkeit, die geographische Breite und den Kurs bestimmt und läßt sich somit ebenfalls errechnen und kompensieren.

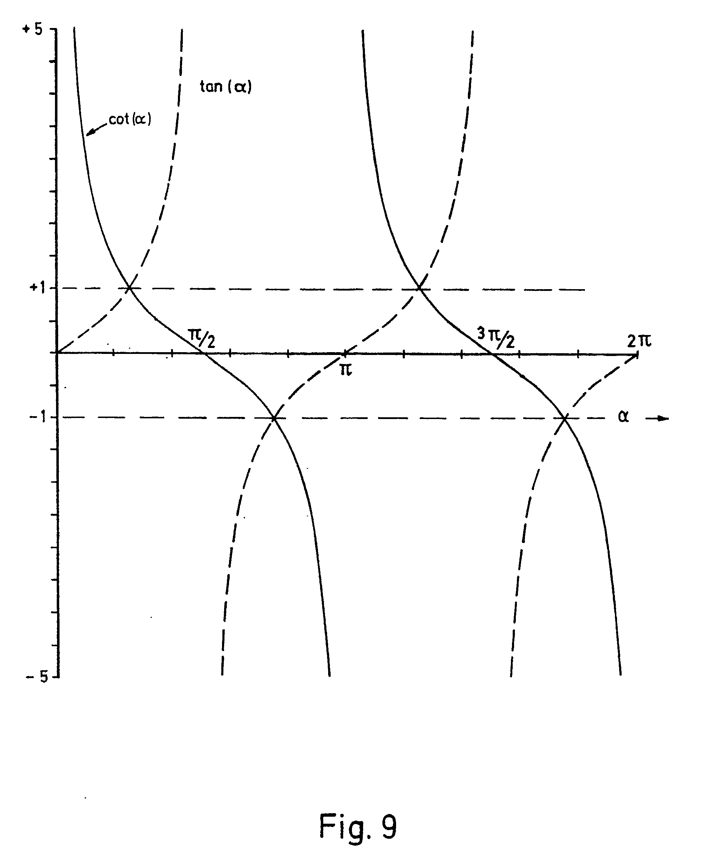

Wie in Fig. 9 dargestellt, zeigt die Tangensfunktion in den Bereichen bei $\frac{\pi}{2}$ und $\pi$ Unstetigkeiten.

Entsprechendes gilt für die cot - Funktion bei $\alpha = 0$ und $\alpha = \pi$.

Da die Gleichung (6) die Tangens-Funktion beinhaltet, treten bei begrenzter Auflösung rechnerische Fehler auf.

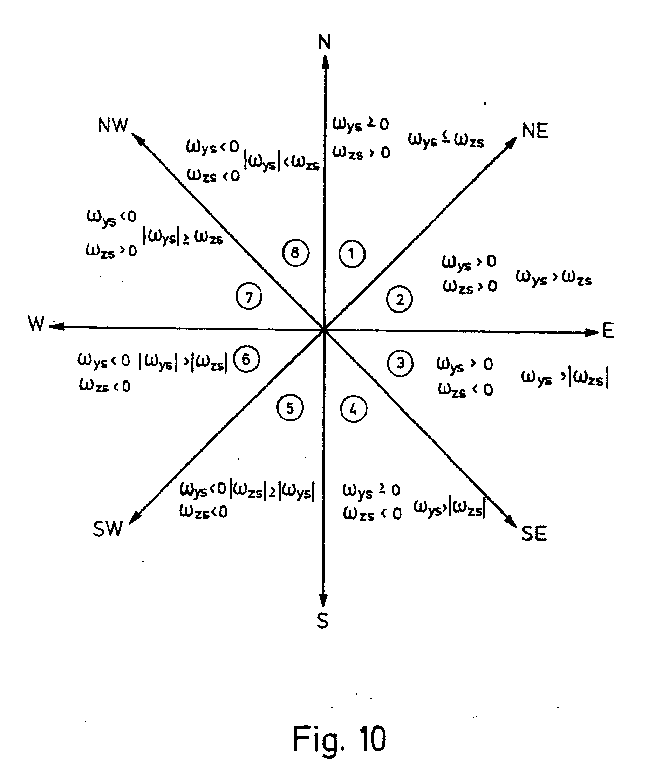

Um dies zu vermeiden, wird der gesamte Bereich $0 \leq \alpha \leq 2\pi$ in acht Segmente aufgeteilt (Fig.10),

Die Bereichsgrenzen liegen für $\tan \alpha$ und $\cot \alpha$ bei $\pm 1$.

Damit braucht $\alpha$ nur in den Bereichen von $\pm 45°$ aus dem Tangens bzw. Cotangens errechnet zu werden.

Die Segmente sind angeordnet wie in Fig. 10 gezeigt und durch Vergleich von $\omega_{ys}$ und $\omega_{zs}$ definiert.

Ermittlung der Vertikalbewegung

Bei Anwendungen auf Schiffen ist neben der Ermittlung der Kurs-, Roll- und Stampfwinkel ebenfalls die Hubbewegung von Wichtigkeit (z. B. Hubschrauberlandungen).

Für diese Anwendung wird der Erfindungsgegenstand mit einem Beschleunigungsmesser 29 (Fig. 3) bestückt, dessen Meßachse (30) mit der Pendelachse 5 zusammenfällt oder parallel angeordnet ist.

Gemäß Figur 11 wird die Hubbeschleunigung $b_{Hub}$ in einer Auswerteelektronik (31) innerhalb eines begrenzten Frequenzbereiches zweimal integriert und so die Hubgeschwindigkeit $V_{Hub}$ und der Hubweg Weg $_{Hub}$ ermittelt. Bedingt durch die einstellbare Pendeldämpfung und eine Aufstellung der Anlage in der Nähe des Schiffsdrehpunktes kann die Beeinflussung durch das Scheinlot vernachlässigt werden.

Symbol-Verzeichnis

$\omega_E$ = Erddrehgeschwindigkeit

$R$ = Erdradius

$\phi$ = Geografische Breite

$V$ = Geschwindigkeit des Fahrzeugs

$H$ = Kreiseldrall

$\alpha$ = Azimuth Winkel )     Diese drei eulerischen Winkel transformieren den

$\theta$ = Stampf   " )     Navigationsrahmen (mit $X_N$ = Lot oben, $Y_N$ = Ost und $Z_N$ = Nord) zu den entsprechenden

$\gamma$ = Roll     " )     Sensorrahmen $X_s$ $Y_s$ $Z_s$.

$\omega$ = Winkelgeschwindigkeit

$g$ = Erdbeschleunigung

$\omega_F$ = Fahrzeugdrehgeschwindigkeit um die Azimuthachse

$\theta_K$ = Winkel gemessen durch Abgriff zwischen innerer Kardanachse und Kardanrahmen

$\gamma_K$ = Winkel gemessen durch Abgriff zwischen Kardanrahmen und Fahrzeug

$\bar{\alpha}$ = Mittelwert (gefilterter Wert) von $\alpha$

$\hat{\alpha}$ = Schätzwert von $\alpha$

$\Delta\alpha$ = Differenz zwischen $\alpha$ und $\bar{\alpha}$

$i$ = Index

Index S = Sensorrahmen

N = Navigationsrahmen

RG = Drehgeschwindigkeitssensor

b = Hubbeschleunigung ⎫

v = Hubgeschwindigkeit ⎬ ·    vertikal wirkend

Weg = Hubweg ⎭

## Patentansprüche

1. Nordermittelndes Kurs- und Lage- Referenzgerät für Fahrzeuge, mit Drehgeschwindigkeitssensoren in Form von Kreiseln für drei zueinander senkrecht stehende Meßachsen, entsprechend den drei zueinan-

EP 0 129 742 B1

der senkrecht stehenden Fahrzeugachsen,

dadurch gekennzeichnet,

a) daß die Kreisel (4, 1) Bestandteil einer gemeinsamen mechanischen Baugruppe sind, die ein Pendel ist, das um beliebige Achsen innerhalb der Horizontalebene pendeln kann und dessen Längsachse (5) in einer stationären Umgebung das Lot darstellt,
b) daß eine (30) der drei Meßachsen der Kreisel (4, 1) mit der Längsachse (5) des Pendels zusammenfällt oder parallel zu dieser liegt, wobei die beiden übrigen Meßachsen (2, 3) senkrecht zur ersten Meßachse (30) und senkrecht zueinander liegen.

2. Referenzgerät nach Anspruch 1, dadurch gekennzeichnet, daß für zwei der drei Meßachsen (2, 3) ein einziger freier Kreisel (1) eingesetzt wird, der in seiner Null- Lage gefesselt ist, und daß für die dritte Meßachse (30) ein Wendekreisel (4) oder ein integrierender Wendekreisel oder ein optischer Drehgeschwindigkeitssensor eingesetzt wird.

3. Referenzgerät nach Anspruch 2, dadurch gekennzeichnet, daß die Drallachse des freien Kreisels (1) mit der Längsachse (5) des Pendels zusammenfällt oder parallel zu dieser liegt, derart, daß die beiden Meßachsen (2, 3) des freien Kreisels senkrecht zur Längsachse des Pendels in einer Ebene liegen, und daß die dritte Meßachse des Wendekreisels (4) oder integrierenden Wendekreisels oder optischen Drehgeschwindigkeitssensors ebenfalls mit der Längsachse (5) des Pendels zusammenfällt.

4. Referenzgerät nach einem der Ansprüche 1 bis 3, dadurch gekennzeichnet, daß das Pendel kardanisch gelagert ist, und daß in den Kardanachsen (10, 11) Winkelmeßelemente (17, 18) wie Potentiometer, Synchros einschließlich Resolver, digitale Winkelmeßelemente und dergleichen vorgesehen sind.

5. Referenzgerät nach Anspruch 4, dadurch gekennzeichnet, daß die Winkelmeßelemente (17, 18) zur Erhöhung der Genauigkeit als mehrstufige Grob-Feingeber ausgeführt sind.

6. Referenzgerät nach Anspruch 5, dadurch gekennzeichnet, daß das Pendel durch ein sphärisches Kugelkalottenlager gelagert ist.

7. Referenzgerät nach einem oder mehreren der Ansprüche 1 bis 6, dadurch gekennzeichnet, daß der Schnittpunkt der beiden Meßachsen (2, 3) des freien Kreisels (1) mit dem Schnittpunkt der beiden senkrecht zueinander stehenden Kardanachsen (10, 11) der Pendellagerung bzw. dem Kugelmittelpunkt des Kalottenlagers zusammenfällt.

8. Referenzgerät nach einem oder mehreren der Ansprüche 1 bis 7, dadurch gekennzeichnet, daß am unteren Ende des Pendels eine Dämpfungseinrichtung in Form einer Kugelschale (9) aus elektrisch leitendem Material angeordnet ist, deren geometrischer Mittelpunkt mit dem Schnittpunkt der Kardanachsen (10, 11) zusammenfällt, und daß unterhalb der Kugelschale (9) ein Dauermagnet oder Elektromagnet (13) auf dem fahrzeugfesten Teil (12) angeordnet ist, der zusammen mit der elektrisch leitenden Kugelschale (9) eine Wirbelstromdämpfung bewirkt.

9. Referenzgerät nach einem der Ansprüche 1 - 7, dadurch gekennzeichnet, daß am unteren Ende des Pendels ein Dauermagnet oder Elektromagnet angeordnet ist, der mit einer darunter angeordneten, mit dem fahrzeugfesten Teil (12) verbundenen Kugelschale zusammenwirkt, um eine Wirbelstromdämpfung des Pendels zu bewirken.

10. Referenzgerät nach einem der Ansprüche 1 - 9, dadurch gekennzeichnet, daß es zur Kompensation der Drift des freien Kreisels (1) mit Hilfe einem Drehlagerung (20) (Figur 3) abgestützt am Gehäuse (21) um 180° zur Längsachse (5) des Pendels manuell oder motorisch schwenkbar angeordnet ist.

11. Referenzgerät nach einem oder mehreren der Ansprüche 1 - 9, dadurch gekennzeichnet, daß zur Kompensation der Drift des freien Kreisels (1) durch eine Einrichtung (19, 20 Fig.3) dieser um eine seiner Meßachsen (2, 3) in bestimmten Zeitabständen um 180° verschwenkbar ist, wobei die Richtung der Verschwenkung in bestimmten Zeitabständen änderbar ist.

9

**12.** Referenzgerät nach einem der Ansprüche 1 - 11, dadurch gekennzeichnet, daß für spezielle Anwendungsfälle zur Erhöhung der statischen Genauigkeit der Kurs- und Lage-Information Lotfühler, wie z. B. Beschleunigungsmesser, Elektrolytlibellen und dergleichen fest im Pendel integriert sind, wobei deren Meßachsen senkrecht auf der Längsachse (5) des Pendels stehen.

**13.** Referenzgerät nach einem der Ansprüche 1 - 12, dadurch gekennzeichnet, daß zwei im wesentlichen identisch aufgebaute freie Kreisel eingesetzt werden.

**14.** Referenzgerät nach einem der Ansprüche 2 - 13, gekennzeichnet durch eine Schaltung, welche aus den zur Fesselung des freien Kreisels (1) in seinen beiden Meßachsen (2, 3) erforderlichen Fesselmomenten zwei entsprechende Fesselsignale ($\omega_{ys}$ $\omega_{zs}$) erzeugt, hinsichtlich Absolutbetrag, Betragsverhältnis und Vorzeichen auswertet, und aus dem Ergebnis dieser Auswertung rechnerisch die Nordrichtung bestimmt.

**15.** Referenzgerät nach Anspruch 14, dadurch gekennzeichnet, daß die Schaltung zuerst aufgrund der Auswertung der Fesselsignale eine winkelmäßige Grobzuordnung des Fahrzeugkurses zu einem Achtelsegment des 360°-Vollkreises durchführt und innerhalb dieses Achtelsegmentes den arc tan aus dem Quotienten der beiden Fesselsignale ($\omega_{ys}$, $\omega_{zs}$) bildet, der dem genauen Kurs innerhalb des Achtelsegmentes entspricht.

**16.** Referenzgerät nach Anspruch 14 oder 15, dadurch gekennzeichnet, daß zusätzlich zu einem Filter (26, Fig. 5), das den Fahrzeugbewegungen überlagerte höherfrequente Signale eliminiert, im Anschluß an das in einem Rechner (25) ermittelte Signal (L) für den genauen Kurswinkel zur Nordrichtung ein zusätzliche Kreisel (24) zur Erfassung der Fahrzeuggeschwindigkeit um die Azimutachse ($\omega_F$) vorgesehen ist, der verzögerungsfrei die Fahrzeugbewegungen erfaßt, und über ein zweites Filter (27) dem Ausgang des ersten Filters (26) ein der geschätzten Fahrzeuggeschwindigkeit um die Azimutachse entsprechendes Signal ($\hat{\omega}_F$) zuführt, aus dem über eine Integration (28) der Schätzwert der Nordrichtung ($\alpha_i$) festgestellt wird.

**17.** Referenzgerät nach einem der Ansprüche 1 - 13, gekennzeichnet durch eine drehbare Lagerung (19, 20) des gesamten Referenzgerätes gegenüber dem Fahrzeug (21) oder lediglich des freien Kreisels (1), deren senkrecht zueinander stehende Meßachsen (2, 3) in einer Ebene senkrecht zur Längsachse des Pendels (5) angeordnet sind, sowie durch eine Schaltung, welche bei Drehung des gesamten Referenzgerätes oder des freien Kreisels (1) in einer der Meßachsen (2, 3) ein Maximum und in der anderen Meßachse (3, 2) ein Minimum des zur Fesselung notwendigen Momentes feststellt, wobei die Lage der zuerst genannten Meßachse der Nord-Süd-Richtung entspricht (Anordnung von Figur 3).

**18.** Referenzgerät nach einem der Ansprüche 1 - 13, gekennzeichnet durch eine drehbare Lagerung (19, 20, 21) des gesamten Referenzgerätes oder lediglich des freien Kreisels (1), deren senkrecht zueinander stehende Meßachsen (2, 3) in einer Ebene angeordnet sind, sowie durch einen kontinuierlichen Drehantrieb des gesamten Referenzgerätes oder des freien Kreisels, und durch eine Schaltung, welche aus dem z.B sinusförmigen Verlauf der beiden zur Fesselung des freien Kreisels in den beiden Meßachsen benötigten Momente um 90° phasenverschobene Signale gewinnt und zur Ermittlung der Nordrichtung auswertet.

**19.** Referenzgerät nach Anspruch 4 oder 5, dadurch gekennzeichnet, daß die Signale ($\theta_K$) und ($\gamma_K$) der Winkelmesselemente (17,18) in einer Elektronik mit den Kreiseln (1,4) derart verknüpft werden, daß die Winkel ($\theta$ und $\gamma$) ermittelt werden.

**20.** Referenzgerät nach einem der Ansprüche 1 bis 19, gekennzeichnet durch die Bestückung mit einem zusätzlichen Beschleunigungsmesser (29, Fig. 3) mit der Meßachse (30) parallel zur Pendelachse und einer Auswerteelektronik, die nach bekannten Verfahren durch Einfach- und Doppel-Integration der Beschleunigung in einem begrenzten Frequenzbereich die Geschwindigkeit und die Linearbewegung entlang der Pendelachse (5) ermittelt.

## Claims

**1.** A north-seeking course and position reference system for vehicles, comprising rotating speed sensors

10

in form of gyros for three vehicle axes which are respectively normal to each other, corresponding to the three vehicle axes normal to each other, wherein

    a) said gyros (1, 4) are parts of a common mechanical construction which is a pendulum which is capable of swinging about any desired axis within the plane of the horizon, and the longitudinal axis (5) of which represents the perpendicular in a stationary environment,

    b) one (30) of the three measuring axes of said gyros (1, 4) either coincides with or is parallel to the longitudinal axis (5) cf the pendulum, and the two other measuring axes (2, 3) are orthogonal to the first measuring axis (30) and to one another.

2. A reference system as claimed in claim 1, wherein for two of said three measuring axes (2, 3) a single free gyro (1) is used which is captive in its zero position, and wherein for the third measuring axis (30) either a two- degree of freedom gyro (4) or an integrating two- degree of freedom gyro or an optical rotating speed sensor is used.

3. A reference system as claimed in claim 2, wherein the spin axis of the free gyro (1) either coincides with or is parallel to the longitudinal axis (5) of the pendulum such that the two measuring axes (2, 3) of the free gyro are perpendicular to the longitudinal axis (5) of the pendulum in one plane, and wherein the third measuring axis of the two- degree of freedom gyro (4) or the integrating two- degree of freedom gyro or the optical rotating speed sensor likewise coincides with the longitudinal axis (5) of the pendulum.

4. A reference system as claimed in any of the claims 1 to 3, wherein the pendulum is mounted on gimbals, and wherein angle measuring elements (17, 18) such as potentiometers, synchros including resolvers, digital angle measuring elements and the like, are provided in the cardanic axes (10, 11).

5. A reference system as claimed in claim 4, wherein the angle measuring elements (17, 18) are designed as multi-stage coarse- fine generators whereby accuracy is improved.

6. A reference system as claimed in claim 5, wherein the pendulum is mounted in a spherical universal ball joint bearing.

7. A reference system as claimed in any or several of the claims 1 to 6, wherein the point of intersection of the two measuring axes (2, 3) of the free gyro (1) coincides with the point of intersection of the two relatively orthogonal cardanic axes (10, 11) of the pendulum mounting or, respectively, the centre of sphere of the universal ball joint bearing.

8. A reference system as claimed in any one or several of the claims 1 to 7, wherein at the bottom end of the pendulum a damping means in the form of a spherical shell (9) of electrically conductive material is provided whose geometrical centre coincides with the point of intersection of the cardanic axes (10, 11), and wherein below the spherical shell (9) a permanent magnet or an electromagnet (13) is mounted on the part (12) fixed to the vehicle, said magnet together with the electrically conductive spherical shell (9) effecting damping of turbulences.

9. A reference system as claimed in any of the claims 1 to 7, wherein at the lower end of the pendulum a permanent magnet or an electromagnet is provided which cooperates with a spherical shell that is disposed therebeneath and is joined to the part (12) fixed to the vehicle, thereby effecting turbulence damping of the pendulum.

10. A reference system as claimed in any of the claims 1 to 9, wherein for compensation of the drift of the free gyro (1) said system is arranged by means of a rotary mounting (20) (Fig. 3) supported on the casing (21) to be rotatable either manually or through a motor about 180 degrees relative to the longitudinal axis (5) of the pendulum.

11. A reference system as claimed in any one or several of the claims 1 to 9, wherein for compensation of the drift of the free gyro (1) the latter is rotatable at predetermined time intervals about one of its measuring axes (2, 3) by 180° by a means (19, 20, Fig. 3), wherein the direction of rotation thereof is variable at predetermined time intervals.

# EP 0 129 742 B1

**12.** A reference system as claimed in any of the claims 1 to 11, wherein for improving the static accuracy of the course and position information in special cases of use, vertical sensors such as accelerometers, electrolytic levels and the like are fixedly integrated in the pendulum, the measuring axes thereof being perpendicular to the longitudinal axis (5) of the pendulum.

**13.** Reference system as claimed in any of the claims 1 to 12, wherein two substantially identical free gyros are used.

**14.** A reference system as claimed in any of the claims 2 to 13, wherein a circuit arrangement is provided which from the capture moments required for making the free gyro (1) captive in the two measuring axes (2, 3) thereof provides two corresponding capture signals ( $\omega_{ys}$, $\omega_{zs}$), evaluates the same as to absolute value, value ratio and sign, and from the evaluation result determines north by calculation.

**15.** A reference system as claimed in claim 14, wherein the circuit arrangement performs initially, on the basis of the evaluation of the capture signals, a coarse angular allocation of the vehicle course to an octant segment of the 360°- circle, and supplies within said octant segment the arcus tangent from the quotient of the two capture signals ( $\omega_{ys}$, $\omega_{zs}$) which arcus tangent corresponds to the exact course within said octant segment.

**16.** A reference system as claimed in claim 14 or claim 15, wherein in addition to a filter network (26, Fig. 5) for eliminating higher- frequency signals superposed on the vehicle movements, an additional gyro (24) for sensing the vehicle speed about the azimuth axis ($\omega_F$) is provided following the signal ( $\alpha_i$) determined in an arithmetic unit (25) for the exact angle of course relative to north, said rotating speed sensor (24) sensing the vehicle movements without delay and supplying to the output of the first filter network (26) via a second filter network (27) a signal ( $\hat{\omega}_F$) which corresponds to the estimated vehicle speed about the azimuth axis from which signal the estimated value of north ( $\alpha_i$) is determined by integration (28).

**17.** A reference system as claimed in any of the claims 1 to 13, wherein either the entire reference system or merely the free gyro (1) is rotatably mounted (19, 20) relative to the vehicle (21), the relatively perpendicular measuring axes (2, 3) thereof being disposed in a plane orthogonal to the longitudinal axis of the pendulum, and wherein a circuit arrangement is provided which upon rotation of either the entire reference system or the free gyro (1) in one of said measuring axes (2, 3) detects a maximum and in the other measuring axis (3, 2) detects a minimum of the moment required for capture, the position of the first- mentioned measuring axis corresponding to the north- south direction (arrangement of Fig. 3).

**18.** A reference system as claimed in any of the claims 1 to 13, wherein either the entire reference system or merely the free gyro (1) whose relatively orthogonal measuring axes (2, 3) are disposed in one plane is rotatably mounted (19, 20, 21), and wherein either the entire reference system or the free gyro is continuously rotatably driven, and wherein a circuit arrangement is provided which from the i.e. sinusoidal characteristic of the two moments required for capturing the free gyro in the two measuring axes obtains signals which are out of phase by 90° and evaluates said signals for determining north.

**19.** A reference system as claimed in claim 4 or claim 5, wherein the signals ($\theta_K$, $\gamma_K$) from the angle measuring elements (17, 18) are combined in an electronic circuit with the gyros (1, 4) such that the angles ( $\theta$ and $\gamma$) are determined.

**20.** A reference system as claimed in any of the claims 1 to 19, wherein an additional accelerometer (29, Fig. 3) having its measuring axis (30) parallel to the axis (5) of the pendulum and an electronic evaluating circuit are provided which in accordance with known techniques by means of single and double- integration of the acceleration in a limited frequency range determines the speed and the linear motion along the axis (5) of the pendulum.

## Revendications

**1.** Dispositif indicateur du nord utilisé comme référence de cap et d'attitude, avec palpeurs de vitesse de rotation sous forme de gyroscopes pour trois axes perpendiculaires l'un par rapport à l'autre correspon-

12

EP 0 129 742 B1

dant aux trois axes du véhicule perpendiculaires l'un par rapport à l'autre,

caractérisé en ce que

a) les gyroscopes (4, 1) sont parties constitutives d'un ensemble mécanique commun, qui est un pendule pouvant osciller autour d'une infinité d'axes dans le plan horizontal, et dont l'axe longitudinal (5) représente la verticale dans un environnement stationnaire,
b) l'un des trois axes de mesure des gyroscopes (4, 1) se confond avec l'axe longitudinal (5) du pendule ou est parallèle à ce dernier, les deux autres axes de mesure (2, 3) étant perpendiculaires au premier axe de mesure (30) et perpendiculaires l'un par rapport à l'autre.

2. Dispositif de référence selon la revendication 1, caractérisé en ce que pour deux des trois axes de mesure (2, 3) on utilise un gyroscope libre unique (1) que l'on bloque dans sa position morte, et que l'on utilise pour le troisième axe de mesure un gyromètre (4) ou un gyromètre intégrant ou un palpeur de vitesse de rotation optique.

3. Dispositif de référence selon la revendication 2, caractérisé en ce que l'axe de rotation du gyroscope libre (1) se confond avec l'axe longitudinal (5) du pendule (5) ou est parallèle à ce dernier, de telle sorte que les deux axes de mesure (2, 3) du gyroscope libre sont perpendiculaires à l'axe longitudinal du pendule (5) dans un plan, et que le troisième axe de mesure du gyromètre (4) ou du gyromètre intégrant ou du palpeur de vitesse de rotation optique se confond également avec l'axe longitudinal du pendule (5).

4. Dispositif de référence selon l'une des revendications 1 à 3, caractérisé en ce que le pendule repose sur un palier à cardan et que dans les axes de cardan (10, 11) dont prévus des éléments de mesure angulaire (17, 18) tels que potentiomètres, synchros y compris resolver, des éléments de mesure angulaire numériques ou des dispositifs analogues.

5. Dispositif de référence selon la revendication 4, caractérisé en ce que les éléments de mesure angulaire (17, 18) sont des relais approche-précision à étages multiples en vue d'en augmenter la précision.

6. Dispositif de référence selon la revendication 5, caractérisé en ce que le pendule repose sur un palier à calotte sphérique.

7. Dispositif de référence selon l'une ou plusieurs des revendications 1 à 6, caractérisé en ce que l'intersection des deux axes de mesure (2, 3) du gyroscope libre (1) se confond avec l'intersection des deux axes de cardan perpendiculaires l'un par rapport à l'autre (10, 11) du palier du pendule et/ou avec le centre sphérique du palier à calotte.

8. Dispositif de référence selon l'une ou plusieurs des revendications 1 à 7, caractérisé en ce qu'à l'extrémité inférieure du pendule est prévu un dispositif d'amortissement en forme d'une coupe sphérique (9) en matériau conducteur dont le centre géométrique se confond avec l'intersection des axes de cardan (10, 11), et qu'un aimant permanent ou un électroaimant (13) est disposé au-dessous de la coupe sphérique (9) sur la partie du dispositif solidaire du véhicule (12), aimant qui, de concert avec la coupe sphérique conductrice de courant électrique (9), a l'effet d'un amortissement à courant de Foucault.

9. Dispositif de référence selon l'une ou plusieurs des revendications 1 à 7, caractérisé en ce qu'un aimant permanent ou un électroaimant est disposé à l'extrémité inférieure du pendule, aimant qui, de concert avec la coupe sphérique liée à la partie solidaire du véhicule (12), a l'effet d'un amortissement à courant de Foucault.

10. Dispositif de référence selon l'une ou plusieurs des revendications 1 à 9, caractérisé en ce que, pour compenser la dérive du gyroscope libre (1), celui-ci est disposé de manière à pouvoir pivoter manuellement ou mécaniquement de 180° autour de l'axe longitudinal du pendule (5) au moyen d'un palier tournant (20, fig. 3) reposant sur le boîtier (21).

13

**11.** Dispositif de référence selon l'une ou plusieurs des revendications 1 à 9, caractérisé en ce que, en vue de compenser la dérive du gyroscope libre (1) au moyen d'un dispsitif (19, 20, fig. 3), le gyroscope (1) peut tourner autour de l'un de ses axes de mesure (2, 3) de 180° en certains intervalles de temps, la direction du pivotage peut être changée en certains intervalles de temps.

**12.** Dispositif de référence selon l'une ou plusieurs des revendications 1 à 11, caractérisé en ce que, pour augmenter la précision statique des informations relatives au cap et à l'attitude du véhicule dans certaines applications, des palpeurs de verticale tels que p.ex. des accéléromètres ou palpeurs électrolytiques sont intégrés solidairement dans le pendule, leurs axes de mesure étant perpendiculaires à l'axe longitudinal de ce dernier.

**13.** Dispositif de référence selon l'une ou plusieurs des revendications 1 à 12, caractérisé en ce que l'on utilise deux gyroscopes libres largement identiques.

**14.** Dispositif de référence selon l'une des revendications 2 à 13, caractérisé par un circuit fournissant deux signaux de blocage ($w_{ys}$, $w_{zs}$) à partir des moments nécessaires pour bloquer le gyroscope libre (1) sur ses deux axes de mesure (2, 3), analysant ces signaux en ce qui concerne leur valeur absolue, leur rapport et leur signe, et déterminant mathématiquement le nord sur la base des résultats de cette analyse.

**15.** Dispositif de référence selon la revendication 14, caractérisé en ce que, sur la base de l'analyse des signaux de blocage, le circuit effectue tout d'abord une attribution grossière du cap du véhicule à l'un des huitièmes de segment d'un cercle de 360°, puis calcule le arc tan correspondant au cap exact à l'intérieur de ce segment à partir du quotient des deux signaux de blocage ($w_{ys}$, $w_{zs}$).

**16.** Dispositif de référence selon la revendication 14 ou 15, caractérisé en ce que, outre un filtre (26, fig. 5) éliminant les signaux à fréquence supérieure qui se superposent aux mouvements du véhicule, est prévu, en aval d'un ordinateur (25) fournissant un signal ($\alpha_i$) pour l'angle du cap par rapport au nord, un gyroscope supplémentaire (24) destiné à enregistrer la vitesse du véhicule autour de l'axe azimutal ($w_F$), qui enregistre sans retard les mouvements du véhicule et fournit par l'intermédiaire d'un deuxième filtre (27) à la sortie du premier filtre (26) un signal ($\widehat{w}_F$) correspondant à la vitesse évaluée du véhicule autour de l'axe azimutal, à partir duquel on établit par voie d'intégration (28) la valeur estimée de la direction du nord ($\alpha_i$).

**17.** Dispositif de référence selon l'une des revendications 1 à 13, caractérisé par un palier tournant (19, 20) permettant à l'ensemble du dispositif ou au seul gyroscope libre (1) de tourner par rapport au véhicule (21), dont les axes de mesure perpendiculaires l'un par rapport à l'autre (2, 3) sont disposés dans un plan perpendiculaire à l'axe longitudinal du pendule (5), ainsi que par un circuit qui, lors du pivotement de l'ensemble du dispositif ou du seul gyroscope libre, enregistre sur l'un des deux axes de mesure (2, 3) le moment maximum nécessaire à son blocage et sur l'autre axe de mesure (3, 2) le moment minimum nécessaire à son blocage, la position de l'axe nommé en premier correspondant à la direction nord-sud (dispositif de la fig. 3).

**18.** Dispositif de référence selon l'une des revendications 1 à 13, caractérisé par un palier tournant (19, 20, 21) permettant à l'ensemble du dispositif ou au seul gyroscope libre (1) de tourner par rapport au véhicule, dont les axes de mesure perpendiculaires l'un par rapport à l'autre (2, 3) sont disposés dans un plan, ainsi que par un entraînement rotatif continu de l'ensemble du dispositif ou du seul gyroscope libre, et par un circuit qui, à partir de l'évolution sinusoïdale des deux moments nécessaires à bloquer les deux axes de mesures du gyroscope libre, fournit des signaux dont la phase est décalée de 90° et exploite ces signaux en vue de déterminer le nord.

**19.** Dispositif de référence selon la revendication 4 ou 5, caractérisé en ce que les signaux ($\theta_K$) et ($\gamma_K$) des éléments de mesure angulaire (17, 18) sont liés électroniquement aux gyroscopes (1, 4) de telle sorte à pouvoir établir les angles ($\theta$ et $\gamma$).

**20.** Dispositif de référence selon l'une des revendications 1 à 19, caractérisé par un accéléromètre supplémentaire (29, fig. 3) dont l'axe de mesure (30) est parallèle à l'axe du pendule, et par un circuit électronique d'exploitation qui, au moyen des procédés connus de l'intégration simple et double de l'accélération sur une plage de fréquence limitée, détermine la vitesse et le mouvement linéaire le long de l'axe du pendule (5).

Fig. 1

Fig. 2

Fig. 3

Fig. 4

Fig. 5

Fig. 6

Fig. 7

Fig. 8

Fig. 9

$$\omega_{ys} \gtrless 0$$
$$\omega_{zs} > 0$$
$$\omega_{ys} \lessgtr \omega_{zs}$$

$$\omega_{ys} < 0$$
$$\omega_{zs} < 0$$
$$|\omega_{ys}| < \omega_{zs}$$

$$\omega_{ys} < 0$$
$$\omega_{zs} > 0$$
$$|\omega_{ys}| \gtrless \omega_{zs}$$

$$\omega_{ys} > 0$$
$$\omega_{zs} > 0$$
$$\omega_{ys} > \omega_{zs}$$

$$\omega_{ys} < 0 \quad |\omega_{ys}| > |\omega_{zs}|$$
$$\omega_{zs} < 0$$

$$\omega_{ys} > 0$$
$$\omega_{zs} < 0$$
$$\omega_{ys} > |\omega_{zs}|$$

$$\omega_{ys} < 0 \quad |\omega_{zs}| \gtrless |\omega_{ys}|$$
$$\omega_{zs} < 0$$

$$\omega_{ys} \gtrless 0$$
$$\omega_{zs} < 0$$
$$\omega_{ys} > |\omega_{zs}|$$

## Fig. 10

24

Fig. 11